# EUROPÄISCHE PATENTSCHRIFT

(11) **EP 1 958 832 B1**
(45) Veröffentlichungstag und Bekanntmachung des Hinweises auf die Patenterteilung: **31.03.2010**
(21) Anmeldenummer: 08002705.5
(22) Anmeldetag: 14.02.2008
(51) Int. Cl.: B60S 1/48

(54) **Fluidzuführschlauch für eine Scheiben- oder Scheinwerferwaschanlage eines Fahrzeuges**
Fluid supply hose for a screen or headlamp washing device of a vehicle
Tuyau d'alimentation en fluide pour une installation de nettoyage de disques ou de phares d'un véhicule

(30) Priorität: 16.02.2007 DE 102007007761
(43) Veröffentlichungstag der Anmeldung: 20.08.2008
(73) Patentinhaber: Vola Plast Werner Hoppach KG, 34286 Spangenberg (DE)
(72) Erfinder: Seyfarth, Lutz, 37287 Wehretal (DE); Bickel, Markus, 34326 Alt-Morschen (DE)
(74) Vertreter: Walther, Walther & Hinz GbR

(56) Entgegenhaltungen:
- EP-A- 1 070 642
- DE-A1-102004 022 998
- DE-U1- 9 004 980
- US-A- 5 539 951

## Beschreibung

Die vorliegende Erfindung betrifft einen Fluidzuführschlauch für eine Scheiben- oder Scheinwerferwaschanlage eines Fahrzeuges gemäß dem Oberbegriff des Anspruches 1.

Bei derartigen Scheiben- oder Scheinwerferwaschanlagen kommt es vor, dass das in der Anlage befindliche Fluid bei frostigen Außentemperaturen einfriert, auch wenn dem Fluid Zusätze beigegeben sind. Um ein solches Einfrieren des Fluids zu verhindern ist lose im Fluidzuführschlauch ein einzelnes Heizkabel vorgesehen, welches bei Außentemperaturen unter 5° C mit elektrischem Strom beaufschlagt wird und sich und das Fluid entsprechend erwärmt.

Dieses Heizkabel ist über die gesamte Länge des Fluidzuführschlauches in Form einer Schleife verlegt, so dass beide Anschlussenden des Heizkabels zwecks Anschluss der Energiequelle an einer Stelle zur Verfügung stehen. Im Querschnitt des Fluidzuführschlauches sind also zwei Stränge des als Schleife verlegten Heizkabels vorhanden, die einerseits viel Platz wegnehmen und andererseits den Strömungswiderstand erhöhen, so dass der Fluidzuführschlauch entsprechend größer ausgelegt werden muss, um einen einwandfreien Durchlass des Fluids zu gewährleisten.

Aus der EP 0 456 024 A1 ist ein elektrisch beheizter Schlauch für eine Scheibenwaschanlage eines Fahrzeuges bekannt, in dessen Lumen ein aus einem Koaxialkabel gebildetes Heizelement verlegt ist. Dieses Koaxialkabel hat einen innenliegenden Heizleiter aus Kupfer und eine darum herum angeordnetes, leitendes Drahtgeflecht, welches ebenfalls aus Kupfer besteht, wobei zwischen dem Heizleiter und dem Drahtgeflecht eine Isolierung vorgesehen ist. An einem freien Ende des Heizelementes sind der Heizleiter und das Drahtgeflecht elektrisch miteinander verbunden. Auch wenn das aus der EP 0 456 024 A1 bekannte Heizelement schon weniger Platz benötigt und weniger Reibungsverluste verursacht als andere aus dem Stand der Technik bekannte Heizelemente, so könnte der Platzbedarf noch weiter reduziert werden.

Davon ausgehend liegt der vorliegenden Erfindung die Aufgabe zu Grunde, einen Fluidzuführschlauch der eingangs genannten Art zu schaffen, bei dem das Heizelement klein und strömungsgünstig ausgeführt ist, so dass der Querschnitt des Fluidzuführschlauches kleiner gewählt werden kann.

Als technische Lösung dieser Aufgabe wird erfindungsgemäß ein Fluidzuführschlauch für eine Scheiben- oder Scheinwerferwaschanlage mit den Merkmalen des Anspruches 1 vorgeschlagen. Vorteilhafte Weiterbildungen sind den Unteransprüchen zu entnehmen.

Ein nach dieser technischen Lehre ausgebildeter Fluidzuführschlauch hat den Vorteil, dass die wesentliche Heizleistung aufgrund des höheren Widerstandes beim inneren Stromleiter anfällt. Dies hat zur Folge, dass der innere Stromleiter vergleichsweise dünn ausgeführt werden kann, was zu einer Reduzierung des benötigten Platzbedarfes führt. In der Praxis wird dabei angestrebt, den Durchmesser des gesamten Koaxialkabels auf 2 mm zu beschränken.

Je nach Modell des Fahrzeuges ist der Fluidzuführschlauch der Scheiben- oder Scheinwerferwaschanlage unterschiedlich lang, was auch unterschiedliche Heizleistungen erforderlich macht, um die gesamte Scheiben- oder Scheinwerferwaschanlage frostfrei zu halten. Gleichzeitig soll aber der Durchmesser des Fluidzuführschlauches für alle Fahrzeugtypen gleich sein, um unnötige Fertigungs- und Lagerkosten zu vermeiden. Um also ein Heizelement zu schaffen, dessen Außendurchmesser annähernd konstant ist und der trotzdem je nach Anforderung eine unterschiedliche Heizleistung aufweist, liegt der Erfindung die Erkenntnis zugrunde, dass bei gleichbleibendem Querschnitt der Widerstand entsprechend angepasst werden muss. Dies wird in einer bevorzugten Ausführungsform dadurch erreicht, dass der innere Stromleiter aus einer Kupfer-Nickel-Legierung gefertigt wird, wobei der Nickelanteil je nach Einsatz variiert wird. So wird z. B. der innere Stromleiter einmal aus einer CuNi2, ein anderes Mal aus einer CuNi6 und wieder ein anderes Mal aus einer CuNilO Legierung gefertigt.

Ein weiterer Vorteil besteht darin, dass ein dünnes Heizelement leicht zu händeln und somit leicht zu montieren ist.

In einer vorteilhaften Weiterbildung ist der äußere Stromleiter aus einer verzinnten oder vernickelten Kupferlitze gefertigt.

In einer anderen, bevorzugten Ausführungsform ist der äußere Stromleiter nicht als Geflecht ausgebildet, sondern umwickelt den Isolator und damit auch den inneren Stromleiter. Dabei hat es sich als vorteilhaft erwiesen, dass der äußere Stromleiter eine Abdeckung des Isolators von 80% bis 98%, vorzugsweise 95% erreicht.

Weitere Vorteile des erfindungsgemäßen Fluidzuführschlauches ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: einen Querschnitt durch einen Fluidzuführschlauch einer erfindungsgemäßen Scheiben- und Scheinwerferwaschanlage;
- Fig. 2: eine teilweise geschnitten dargestellte, perspektivische Ansicht eines Fluidzuführschlauches gemäß Fig. 1;
- Fig. 3: eine perspektivisch geschnittene Ansicht einer zweiten Ausführungsform eines Heizelementes.

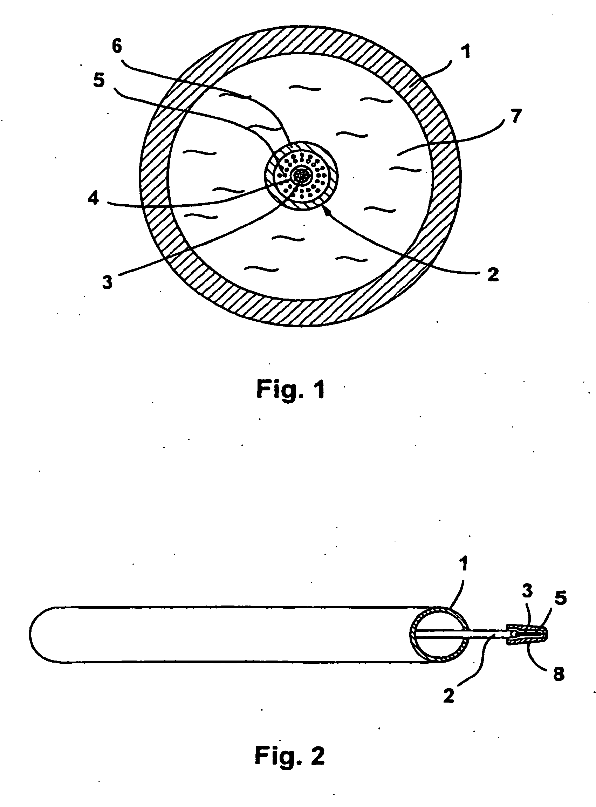

In den Fig. 1 und 2 ist ein Fluidzuführschlauch 1 für eine Scheiben- oder Scheinwerferwaschanlage eines Fahrzeugs dargestellt, in dessen Inneren ein als Koaxialkabel 2 ausgeführtes Heizelement verlegt ist. Dieses Koaxialkabel umfasst einen inneren Stromleiter 3, der von einem Isolator 4 umgeben ist und einen äußeren Stromleiter 5, wobei der äußere Stromleiter 5 von einer wasserdichten und elektrisch nicht leitfähigen Hülle 6 geschützt wird. Dabei ist der innere Stromleiter 3 aus einem mehrere Litzen aufweisenden und in sich verdrillten Metalllitzen gebildet, während der den Isolator 4 umgebende äußere Stromleiter 5 aus einem aus mehreren Litzen gebildeten Geflecht gebildet ist. Dabei ist es vorteilhaft, den Widerstand des äußeren Stromleiters 5 größer als den Widerstand des inneren Stromleiters 3 auszubilden, damit am äußeren Stromleiter 5 mehr Wärme abfällt, die zum Erwärmen des das Koaxialkabel 2 umgebenden Fluids 7 genutzt werden kann.

In einer anderen, hier nicht dargestellten Ausführungsform ist der Widerstand des inneren Stromleiters größer als den Widerstand des äußeren Stromleiters. Hierdurch kann das Koaxialkabel dünner ausgeführt werden und nimmt im Fluidzuführschlauch entsprechend weniger Platz weg.

Das Koaxialkabel weist ein distales und ein proximales Ende auf, wobei am proximalen Endes Koxialkabels 2 sowohl am inneren Stromleiter 3 als auch am äußeren Stromleiter 5 ein hier nicht näher dargestellter Steckkontakt vorgesehen ist, um das Koaxialkabel 2 mit einer Stromquelle zu verbinden. Am distalen Ende des Koaxialkabels 2 werden der innere Stromleiter und der äußere Stromleiter 5 elektrisch miteinander verbunden, um einen durchgängigen Stromfluss zu ermöglichen. An dieser Stelle wird das distale Ende mit einer Schutzhülle 8 versehen, die die Stromleiter 3, 5 gegen Feuchtigkeit isolieren sollen.

Es versteht sich, dass das Koaxialkabel 2 im gesamtem Fluidzuführschlauch verlegt wird, um die gesamte Scheiben- oder Scheinwerferwaschanlage vor Einfrieren des Fluids zu schützen.

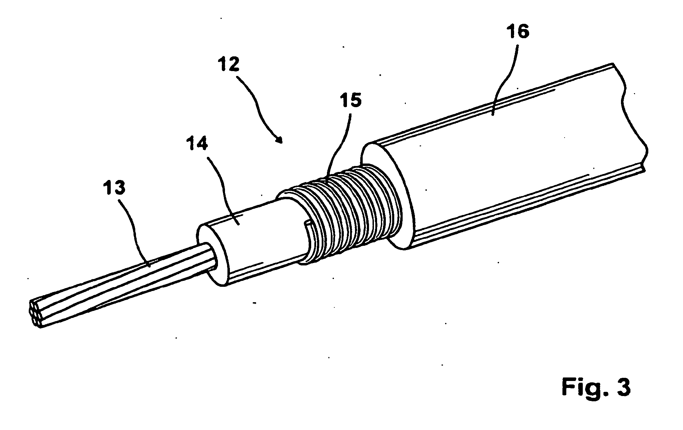

In Fig. 3 ist eine weitere Ausführungsform eines Koaxialkabels 12 dargestellt, welches als Heizelement im Fluidzuführschlauch eingesetzt wird, welches einen aus einer Kupfer-Nickel-Legierung erstellten, inneren Stromleiter 13 umfasst. Um den Stromleiter 13 herum ist ein Isolator 14, beispielsweise aus PTFE, angeordnet ist, der von dem äußeren Stromleiter 15 derart umwickelt ist, dass 95 % des Isolators 14 abgedeckt sind. Dieser Stromleiter 15 ist als vernickelte Kupferlitze ausgebildet, deren Widerstand geringer ist, als der Widerstand des inneren Stromleiters 13. Dabei ist der Widerstand des inneren Stromleiters 13 etwa 50-Mal so hoch, wie der Widerstand des äußeren Stromleiters 15.

In einer anderen Ausführungsform kann der Widerstand des inneren Stromleiters auch um den Faktor 30 oder in noch einer anderen Ausführungsform gar um den Faktor 70 größer als der Widerstand des äußeren Stromleiters sein. Dieser äußere Stromleiter 15 ist dann von einer isolierenden Hülle 16 umgeben, so dass das Koaxialkabel 12 vom Wasser oder von einer wasserähnlichen Lösung umgeben sein kann und dennoch ordnungsgemäß funktioniert.

Der innere Stromleiter 13 ist aus einer Kupfer-Nickel-Legierung, insbesondere aus CuNi2 gebildet. CuNi2 wird vorzugsweise bei vergleichsweise langen Fluidzuführschläuchen eingesetzt, wie sie bei großen Automobilen vorzufinden ist, weil dort eine vergleichsweise hohe Heizleistung benötigt wird. Durch das CuNi2 kann ein vergleichsweise hoher Widerstand im inneren Stromleiter erreicht werden, ohne den Durchmesser des Koaxialkabels zu erhöhen.

Bei kleineren Automobilen ist auch die gesamte Scheiben- und Scheinwerferwaschanlage kleiner ausgelegt, so dass auch die Fluidzuführschlauch kleiner ist. Folglich wird hier eine geringere Heizleistung benötigt. In diesem Fall ist es auch sinnvoll, die Heizleistung des Heizelementes und somit den Widerstand des inneren Stromleiters des Koaxialkabels zu reduzieren. Da aber idealerweise der eigentliche Fluidzuführschlauch für alle Modelle die gleiche Größe aufweist, ist es auch erstrebenswert, ein Koaxialkabel der gleichen Größe für alle Fahrzeugmodelle einzusetzen. Aus diesem Grund wird erfindungsgemäß die Legierung des inneren Stromleiters dahingehend geändert, dass hier ein geringerer Widerstand anfällt, so wird beispielsweise für kleinere Fahrzeuge die Kupfer-Nickel-Legierung CuNi10 eingesetzt.

Es versteht sich, dass bei anderen Fahrzeugtypen auch andere Kupfer-Nickel-Legierungen mit einem anderen Nickelanteil, beispielsweise CuNi6, eingesetzt werden können.

### Bezugszeichenliste:

- 1: Fluidzuführschlauch
- 2, 12: Koaxialkabel
- 3, 13: innerer Stromleiter
- 4, 14: Isolator
- 5, 15: äußerer Stromleiter
- 6: Hülle
- 7: Fluid
- 8: Schutzhülle

## Patentansprüche

1. Fluidzuführschlauch für eine Scheiben- oder Scheinwerferwaschanlage eines Fahrzeuges mit einem elektrischen Heizelement, wobei das Heizelement ein innerhalb des Fluidzuführschlauch verlegten Koaxialkabel (2,12) mit einem inneren Stromleiter (3, 13) und einem, den inneren Stromleiter (3, 13) umgebenden, äußeren Stromleiter (5, 15) aufweist und wobei zwischen dem inneren und dem äußeren Stromleiter (5, 15) ein Isolator (4, 14) vorgesehen ist,
**dadurch gekennzeichnet,**
**dass** der innere Stromleiter (3, 13) einen höheren elektrischen Widerstand als der äußere Stromleiter (5,15) aufweist.

2. Fluidzuführschlauch nach Anspruch 1,
**dadurch gekennzeichnet,**
**dass** das der innere Stromleiter (13) aus einer Kupfer-Nickel-Legierung, insbesondere aus CuNi2, CuNi6 oder CuNi10 gebildet ist.

3. Fluidzuführschlauch nach Anspruch 1,
**dadurch gekennzeichnet,**
**dass** der äußere Stromleiter (15) den Isolator (14) umwickelt.

4. Fluidzuführschlauch nach Anspruch 1,
**dadurch gekenntzeichnet,**
dass der äußere Stromleiter (15) den Isolator (14) zwischen 80 % und 98 %, vorzugsweise 95 % überdeckt.

## Claims

1. A fluid supply hose for a windscreen or headlamp washer system of a vehicle with an electric heating element, said heating element comprising a coaxial cable (2, 12) laid inside said fluid supply hose with an inner current conductor (3, 13) and with an outer current conductor (5, 15) surrounding said inner current conductor (3, 13), whereas an isolator (4, 14) being provided between said inner and said outer current conductor (5, 15),
**characterized in**
**that** said inner current conductor (3, 13) has a higher electrical resistance than said outer current conductor (5, 15).

2. The fluid supply hose as set forth in claim 1,
**characterized in**
**that** the inner current conductor (13) is formed from a copper-nickel alloy, in particular from CuNi2, CuNi6 or CuNi10.

3. The fluid supply hose as set forth in claim 1,
**characterized in**
**that** the outer current conductor (15) is wrapped around the isolator (14).

4. The fluid supply hose as set forth in claim 1,
**characterized in**
**that** the outer current conductor (15) covers the isolator (14) between 80 % and 98 %, preferably 95 %.

## Revendications

1. Flexible d'alimentation en fluide pour un lave-glace ou pour un lave-phare d'un véhicule avec un élément de chauffage électrique, l'élément de chauffage comportant un câble coaxial (2, 12) posé à l'intérieur du flexible d'alimentation en fluide, avec un conducteur de courant interne (3, 13) et avec un conducteur de courant externe (5, 15) qui entoure le conducteur de courant interne (3, 13) et un isolant (4, 14) étant prévu entre le conducteur de courant interne et le conducteur de courant externe (5, 15),
**caractérisé en ce**
**que** le conducteur de courant interne (3, 13) a une résistance électrique plus élevée que le conducteur de courant externe (5, 15).

2. Flexible d'alimentation en fluide selon la revendication 1,
**caractérisé en ce**
**que** le conducteur de courant interne (13) est formé à partir d'un alliage de cuivre et de nickel, notamment d'un alliage CuNi2, CuNi6 ou CuNi10.

3. Flexible d'alimentation en fluide selon la revendication 1,
**caractérisé en ce**
**que** le conducteur de courant externe (15) enveloppe l'isolant (14).

4. Flexible d'alimentation en fluide selon la revendication 1,
**caractérisé en ce**
**que** le conducteur de courant externe (15) recouvre l'isolant (14) entre 80 % et 98 %, de préférence 95 %.
